# EUROPEAN PATENT APPLICATION

(11) **EP 4 841 580 A1**
(43) Date of publication of application: **18.11.2026**
(21) Application number: 25315161.7
(22) Date of filing: 12.05.2025
(51) Int. Cl.: G06V 10/762, G06V 10/82

(54) **ESTIMATING YIELD OF A FRUIT TREE**

(71) Applicant: CNH Industrial France S.A.S., 91150 Morigny-Champigny (FR); CNH Industrial Italia S.p.A., 10156 Torino (IT)
(72) Inventor: Ferrari, Luca, 10156 Turin (IT); Styblinski, Theo, 91150 Morigny-Champigny (FR); Savas, Iremsu, 10156 Turin (IT)
(74) Representative: CNH Industrial IP Department

(57) **Abstract**

The present invention relates to a computer-implemented method of estimating a yield of a fruit tree. The computer-implemented method comprises: capturing a plurality of images of a row of fruit trees; detecting a first feature of a first fruit tree and a second feature of a second fruit tree in the row of fruit trees in the images; detecting fruit clusters in the plurality of images; assigning any fruit clusters between the first feature and the second feature to the first fruit tree; calculating an area of the assigned fruit clusters; and estimating the yield of the first fruit tree based on a total area of the assigned fruit clusters. The present invention similarly relates to a computer-implemented method of estimating fruit yield of a fruit tree.

## Description

### FIELD

The subject-matter of the present disclosure relates to estimating the yield of a fruit tree or a fruit tree cordon, in particular, computer-implemented methods of estimating yields of fruit trees or fruit tree cordons.

### BACKGROUND

Typically, it is useful for farmers to estimate the yield of their fruit trees prior to harvesting in order to estimate how much money they can expect to make. Yield estimates are primitive calculations based on the number of fruit trees planted and the size of the field in which they were planted. The issue with this method of estimating the yield is that the estimations used may have large errors and they do not account for any external factors such as the weather. These estimations do not take into consideration the yield of individual fruit trees or individual features of a specific plant such as the yield of each cordon of a grape vine. The only way to estimate the yield of each individual plant accurately is to measure the yield and keep a record of how much yield each individual plant produced. For a large field, this can be tedious and difficult to record since some fruit trees are harvested with a machine, and only the final yield is weighed. And for fruit trees which are picked by hand it can be tedious to record the location of each plant and the yield it produced.

It may be beneficial to some farmers to estimate the yield of their fruit trees a number of times throughout its growing phase. This allows the farmer to track whether the crops are growing as expected. It may also be beneficial for the farmer to estimate the yield of specific fruit trees and even specific cordons on specific assets. This allows the farmer to identify specific assets that may not be performing as expected and intervene in order to achieve the best yield possible.

It is an aim of the present invention to address such problems and improve on the prior art.

### SUMMARY

According to an aspect of the present disclosure, there is provided a computer-implemented method of estimating a yield of a fruit tree, the computer-implemented method comprising: capturing a plurality of images of a row of fruit trees; detecting a first feature of a first fruit tree and a second feature of a second fruit tree in the row of fruit trees in the images; detecting fruit clusters in the plurality of images; assigning any fruit clusters between the first feature and the second feature to the first fruit tree; calculating an area of the assigned fruit clusters; and estimating the yield of the first fruit tree based on a total area of the assigned fruit clusters.

According to an aspect of the present disclosure, there is provided a computer-implemented method of estimating fruit yield of a fruit tree cordon, the computer-implemented method comprising: capturing an image including the fruit tree; detecting a first feature and a second feature of the fruit tree in the image; detecting fruit clusters in the image; identifying any fruit clusters between the first feature and the second feature of the fruit tree; calculating an area of the identified fruit clusters; and estimating the yield of a cordon of the fruit tree based on areas of the identified clusters.

The above methods allow farmers to estimate the yield of their fruit trees before harvesting the fruit. It also allows farmers to identify specific fruit trees that are not performing poorly in terms of yield. The above methods respectively enable the yield of a single cordon fruit tree and a multi-cordon fruit tree to be estimated.

In an embodiment, identifying any fruit clusters between the first feature and the second feature to the fruit tree comprises: determining a position of each fruit cluster, the first feature, and the second feature; comparing the position of each fruit cluster to the respective positions of the first and second features; and identifying at least one fruit cluster of the fruit tree having a position between the respective positions of the first and second features.

In an embodiment, determining the position of each fruit cluster comprises: determining a centre point of each fruit cluster.

In an embodiment, the fruit tree comprises a first cordon and a second cordon in a multiple cordon fruit tree.

In an embodiment, the first feature is a tip of a first cordon, and the second feature is a tip of a second cordon of the multiple cordon fruit tree.

In an embodiment the first feature is a tip of a first cordon, and the second feature is a trunk of the multiple cordon fruit tree.

In an embodiment, detecting one or more of the first feature, the second feature, and the fruit clusters comprises constructing a bounding box therearound using a machine learning model.

In an embodiment, the machine learning model is a You Only Look Once, YOLO, algorithm.

In an embodiment, calculating an area of the assigned fruit clusters comprises counting a number of pixels within each fruit cluster.

In an embodiment, calculating an area of the assigned fruit clusters comprises: semantically distinguishing pixels associated with the fruit clusters from pixels not associated with the fruit clusters; and counting the pixels associated with the fruit clusters.

In an embodiment, estimating yield of the fruit tree cordon or fruit tree comprises estimating a weight of fruit based on a predefined relationship between weight of fruit and area of fruit.

In an embodiment, the first feature is a trunk of the first fruit tree and the second feature is a trunk of the second fruit tree.

The fruit cluster may be a bunch of grapes.

According to an aspect of the present disclosure there is provided a transitory, or non-transitory, computer-readable medium having instructions stored thereon, that when executed by at least one processor causes the at least one processor to perform the computer-implemented method of any preceding claim.

According to an aspect of the present disclosure there is provided an agricultural machine comprising: a camera; and a controller configured to estimate a yield of a fruit tree by: capturing a plurality of images of a row of fruit trees; detecting a first feature of a first fruit tree and a second feature of a second fruit tree in the row of fruit trees in the images; detecting fruit clusters in the plurality of images; assigning any fruit clusters between the first feature and the second feature to the first fruit tree; calculating an area of the assigned fruit clusters; and estimating the yield of the first fruit tree based on a total area of the assigned fruit clusters.

### BRIEF DESCRIPTION OF DRAWINGS

The subject-matter of the present disclosure is best described with reference to the accompanying figures, in which:
Figure 1 shows a side view of an agricultural machine;
Figure 2 shows a block diagram of a computer used for implementing one or more of the computer-implemented methods described herein;
Figure 3 shows a plan view of a field including a plurality of rows of crops in which the fruit harvesting machine operates;
Figure 4 shows an image of a row of single cordon fruit trees;
Figure 5 shows a graph of the yield per fruit tree;
Figure 6 shows an image of a multi cordon fruit tree;
Figure 7 shows a graph of the yield per cordon of the multi cordon fruit tree;
Figure 8 shows an image of a multi cordon fruit tree;
Figure 9 shows a graph of the yield per cordon of the multi cordon fruit tree.

### DESCRIPTION OF EMBODIMENTS

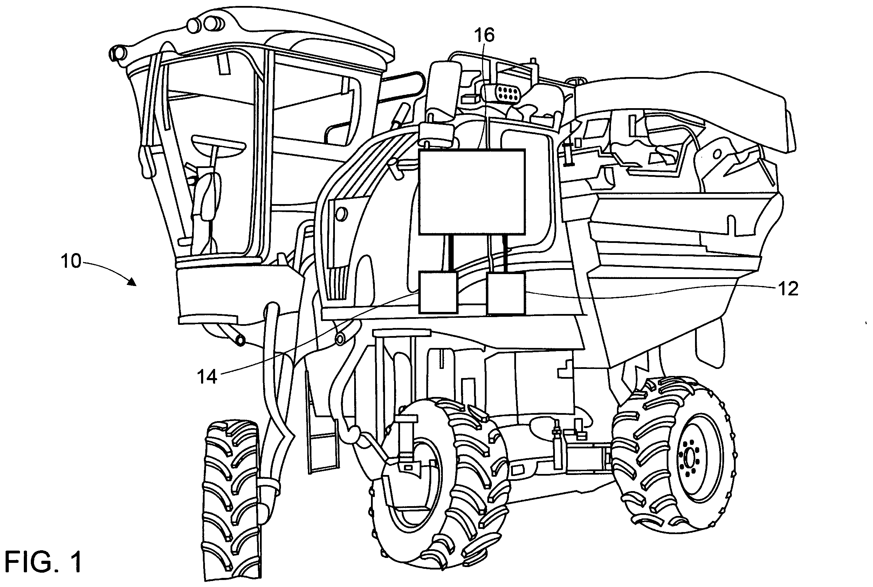

With reference to Figure 1, an agricultural machine 10 includes a camera 12, a positioning system 14, and computer 16.

The agricultural machine 10 may be an agricultural vehicle such as a tractor or any other type of agricultural vehicle. The agricultural machine 10 may be self-propelled. The agricultural machine 10 may include a tractor, for example, towing a trailer carrying the camera 12, positioning system 14 and computer 16.

The camera 12 may be a single camera, or two or more cameras. The camera 12 may be mounted on a side of the agricultural machine 10. The camera 12 may be mounted to point perpendicular to a forward direction of travel of the agricultural machine 10. The camera 12 may be configured to capture images of fruit trees. The camera 12 may capture an RGB image of fruit trees. The camera 12 may also capture black and white images of fruit trees. The camera 12 may also capture any other type of image which may aid in identifying fruit trees in an image e.g., ultraviolet or infrared.

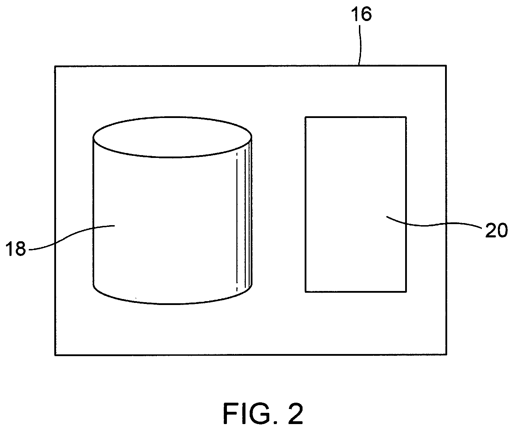

With reference to Figure 2, the computer 14 may include a processor 20 and storage 18 and may be configured to record images captured by the camera 12. The computer 14 may be further responsible for estimating the yield of a fruit tree or another computer may retrieve the images from the storage 18 to estimate the yield of a fruit tree remotely on another such computer. The processor 20 is configured to execute the instructions stored in the storage 18. In this way, the storage 18 of the computer 14, or the remote computer, acts as non-transitory, computer-readable medium, having instructions stored thereon, that when executed by one or more processors, cause the one or more processors to perform the computer-implemented method described herein. When storing the instructions to the storage 18, they may be in the form of transitory computer readable media, e.g., a download signal.

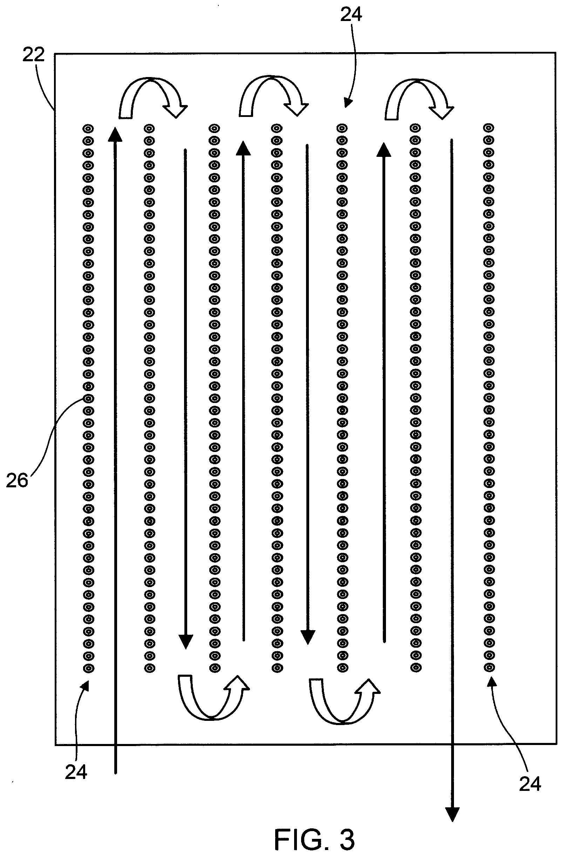

With reference to Figure 3, to estimate the yield of a fruit tree 26, the agricultural machine 10 traverses a route. The route involves the agricultural machine 10 moving along the route between the plurality of rows 24. The rows may comprise the fruit trees 26. As the agricultural machine 10 traverses the route, the camera 12 captures images. The images may be stitched together. The fruit trees may be fruit trees/plants/vines e.g., a grape vine. In a first embodiment the camera 12 may capture a plurality of images of a row of fruit trees. In a second embodiment the camera 12 may capture an image including the fruit tree.

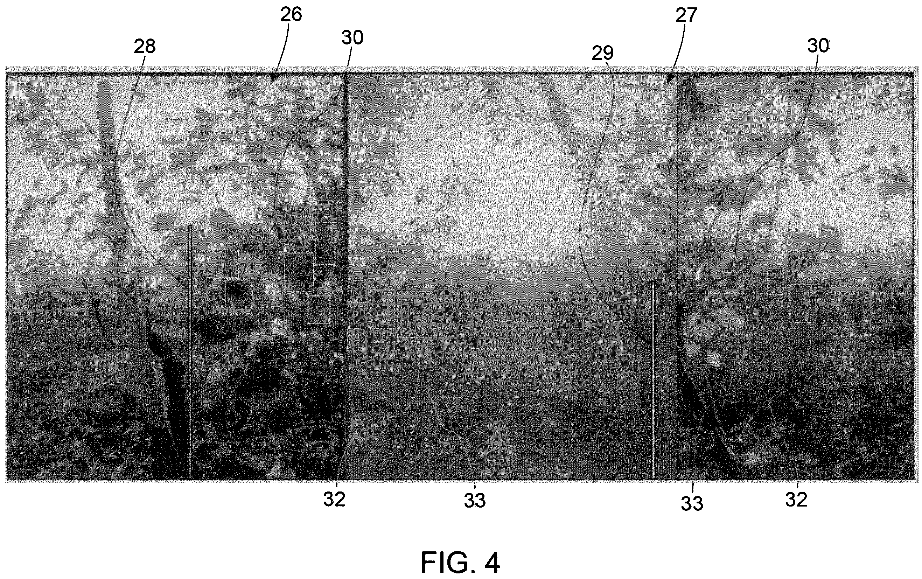

With reference to Figure 4, in a first embodiment, one or more images show a first fruit tree 26 and a second fruit tree 27. The first fruit tree 26 comprises a first feature 28. The first feature may be a trunk of the first fruit tree 26. The second fruit tree 27 comprises a second feature 29. The second feature may be a trunk of the second fruit tree 27. A cordon 30 may stem from the trunk of the first fruit tree 26 and from the trunk of the second fruit tree 27. The cordon may bare a plurality of fruit clusters 32. A fruit cluster 32 may be a bunch of grapes or any other fruit that grows in clusters. A fruit cluster 32 does not refer to individual grapes.

Figure 4 shows an image of a row of single cordon fruit trees. With reference to Figure 4, in a first embodiment, a first feature of a first fruit tree and a second feature of a second fruit tree in the row of fruit trees in the images is detected. The fruit clusters 32 are also detected in the plurality of images. Detecting one or more of the first feature, the second feature and the fruit clusters 32 may use a machine learning model. The machine learning model may be a You Only Look Once, YOLO, algorithm. The YOLO algorithm may be a real-time object detection algorithm. The YOLO algorithm constructs a bounding box 33 around each object of interest. The YOLO algorithm uses a deep convolutional neural network. Therefore, identifying the plurality of fruit clusters 32 in the image 28 comprises constructing a bounding box 33 around each identified fruit cluster 32.

Following the detection of the fruit clusters 32, the first feature of the fruit tree and the second feature of the fruit tree, any fruit clusters 32 between the first feature and the second feature are assigned to the first fruit tree. For example, any fruit clusters 32 between the trunk of the first fruit tree 28 and the trunk of the second fruit tree 29 are assigned to the first fruit tree 26. In this example, the fruit clusters 32 between the trunks are assumed to be originating from the first fruit tree 26. When a new trunk is detected (for example, a trunk of a third fruit tree as the agricultural machine 10 traverses the route and acquire additional images), the fruit clusters 32 detected between the second fruit tree 29 and the third fruit tree will be assigned to the second fruit tree 29. This method works because the cordons of the respective fruit trees have been trained to grow substantially horizontally in the same direction, e.g. in a direction substantially parallel to the row of the fruit trees and thus in a direction of travel of the agricultural machine.

The area of the assigned fruit clusters 32 are then calculated. This will then determine the area of the assigned fruit clusters 32 associated with the first fruit tree 26. Calculating an area of the assigned fruit clusters 32 comprises counting a number of pixels within each bounding box 33. Calculating an area of the assigned fruit clusters 32 may alternatively comprise semantically distinguishing pixels associated with the fruit clusters 32 from pixels not associated with the fruit clusters 32 and counting the pixels associated with the fruit clusters 32. Semantically distinguishing between pixels may be performed using a semantic segmentation algorithm. Semantic segmentation algorithms categorise the pixels within an image. This may comprise identifying pixels which are classified as "fruit", and any other pixels may be classified as "non fruit". The semantic segmentation algorithm may be a neural network. The neural network used for semantic segmentation may be trained using pre-labelled datasets. The pre-labelled datasets may include images where pixels showing fruit are labelled as fruit and pixels not showing fruit are labelled as not showing fruit. The neural network may be trained using back-propagation in addition to an optimisation algorithm, e.g., gradient descent. The yield of the first fruit tree 26 may be estimated based on a total area of the assigned first clusters 32. The yield of the first fruit tree may be estimated by estimating a weight of fruit based on a predefined relationship between weight of fruit and area of fruit. The predefined relationship may be based off historical yields and historical images. For example, once the areas of fruit have been identified, the fruit may be collected and weighed. This may be repeated across and entire field of fruit trees. An average ratio of area to weight may be calculated.

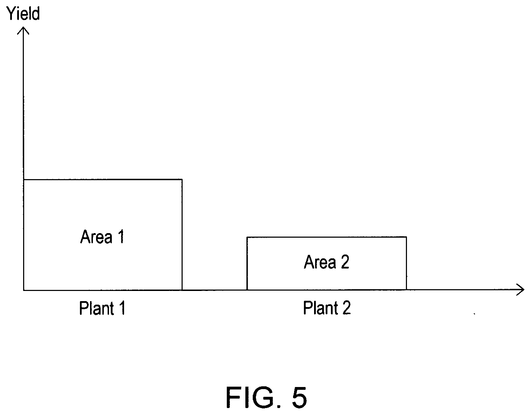

Figure 5 shows a chart of the yield for two plants in a row, where each plant is a fruit tree. The yield of each fruit tree has been obtained according to the first embodiment described above. In the first embodiment, the trunk and the cordon will be detected. The global position, e.g. global positioning system (GPS) coordinates, of the agricultural vehicle will be recorded. The position of the fruit tree including the trunk and the cordon will be determined in the image(s). The global position of the fruit tree in the field will then be calculated using the position of the agricultural vehicle and the relative position of the fruit tree to the agricultural vehicle from the images.

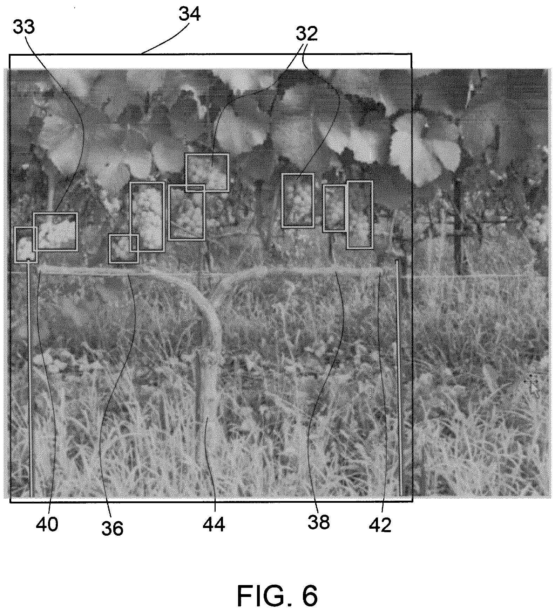

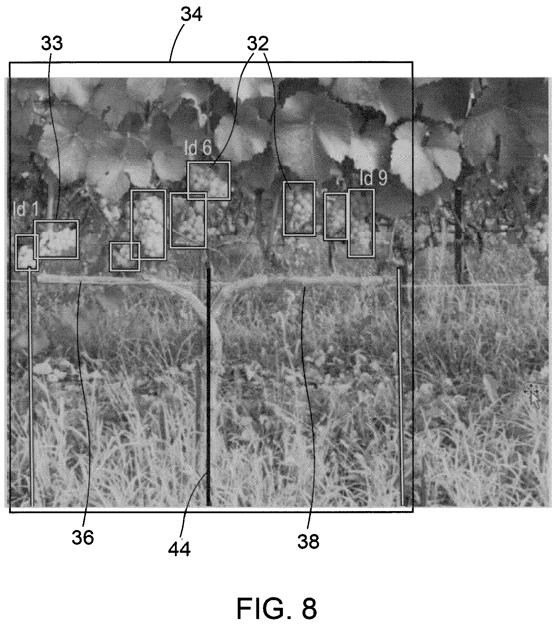

With reference to Figure 6, in a second embodiment, an image comprises a fruit tree 34. The fruit tree 34 may be a multiple cordon fruit tree. The fruit tree 34 may be a fruit tree/plant/vine., e.g., a grape vine. The fruit tree 34 comprises a first cordon 36 and a second cordon 38 in a multiple cordon fruit tree. The cordons may bare a plurality of fruit clusters 32. A fruit cluster 32 may be a bunch of grapes or any other fruit that grows in clusters. A fruit cluster 32 does not refer to individual grapes. The fruit tree 34 may comprise a first feature and a second feature. The first feature may be a tip of a first cordon 36. The second feature may be a tip of the second cordon 38. The second feature may be a trunk 44 of the multiple cordon fruit tree. Figure 6 shows an example where the second feature is a tip of the second cordon. Figure 8 shows an example where the second feature is a trunk of the fruit tree.

With reference to Figure 6, an image is captured including the fruit tree 34. The first feature 40 and second feature 42 of the fruit tree 24 is detected in the image. The fruit clusters 32 are also detected in the image. The first feature 40, the second feature 42 and the fruit clusters are detected using the YOLO algorithm as previously discussed. For brevity, the YOLO algorithm will not be discussed here as it has previously been discussed in detail.

Any fruit clusters 32 positioned between the first feature 40 and the second feature 42 of the fruit tree 34 are identified. Identifying any fruit clusters 32 between the first feature 40 and the second feature 42 to the fruit tree 34 may comprise determining a position of each fruit cluster 32 to the respective positions of the first 40 and second features 42. Determining a position of each fruit cluster 32 may comprise determining a centre point of each fruit cluster 32. Determining the centre point of each fruit cluster 32 may first comprise determining the centre point inside a bounding box 33 produced by the YOLO algorithm. The position of each fruit cluster 32 may be compared to the respective positions of the first feature 40 and second feature 42. Identifying any fruit clusters between the first feature and second feature also includes comparing the position of each fruit cluster to the respective positions of the first and second features. When the position of the fruit cluster 32 is between the respective positions of the first and second features, the fruit cluster may be identified. In the second embodiment this means that any fruit clusters between the tip of the first cordon and the tip of the second cordon are assigned to the fruit tree 34. In the second embodiment, the assignment of each fruit cluster 32 will be done when the trunk and the second cordon belonging to the same fruit tree is detected.

Following the assigning of fruit clusters 32, an area of the identified fruit cluster is then calculated. The area may be calculated in the same way as previously described, and will not be repeated. The yield of the cordon of the fruit tree may be estimated based on areas of the identified fruit clusters 32. As previously described the yield of the fruit tree comprises estimating a weight of fruit based on a predefined relationship between weight of fruit and area of fruit.

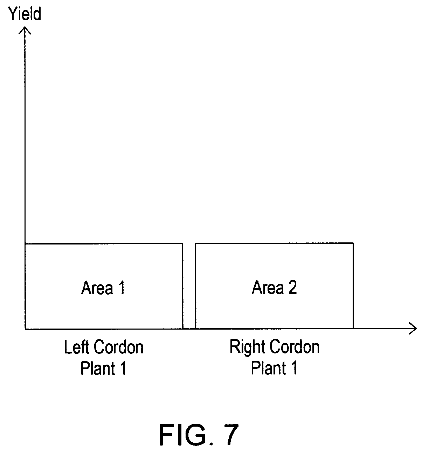

In the second embodiment, the yield of each cordon is estimated by estimating the yield of the entire fruit tree and then dividing by two, as shown in Figure 7. If a fruit tree has three cordons, then the yield of the fruit tree is divided by three to calculate the yield per cordon, and so on. In other words, the yield of each cordon is calculated by dividing the total yield of the fruit tree by the number of cordons. The assumption here is that each cordon produces an equal share of the fruit clusters. This method of determining the yield per cordon/fruit tree is primitive and does not take into consideration that each cordon may produce different yields. Figure 6 shows the yield per cordon for a single fruit tree whereby the second feature is the tip of a second cordon. For each newly detected cordon, each step will be performed again.

A position of the fruit tree, and thus the yield of the fruit tree, or each cordon, is obtained in the same manner as described in the first embodiment.

In a third embodiment shown in Figure 8 (where the first feature is a cordon tip and the second feature is a trunk of the same fruit tree), the area of fruit produced by each cordon is calculated. Therefore, the yield of each cordon can be estimated. As the agricultural machine 10 traverses the route, the cordon and trunk will be detected along with the GPS coordinates of the agricultural vehicle. After the first cordon is detected, the detected grape bunches are going to be assigned to the specific fruit tree. The assignment of each grape bunch will be done when the trunk and the latest cordon belonging to the same fruit tree is detected. A unique ID will be assigned to each detected grape bunch. Depending on the changes on the grape bunch ID, the assignment of each grape bunch will be done. Therefore, after the detection of the first cordon, when a trunk is detected and when there is a change on the grape ID, the grapes will be assigned to the following cordon on the same fruit tree. For each newly detected cordon which belongs to another fruit tree, if the grape ID has also changed, the assignment will begin again.

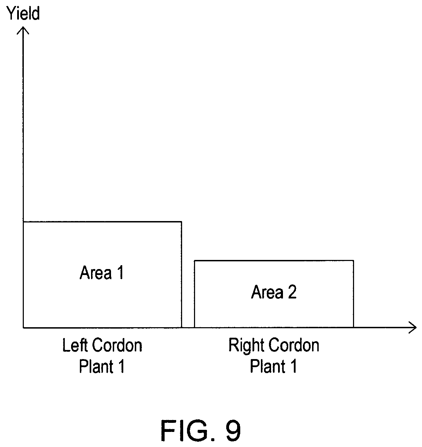

As the agricultural machine 10 traverses the route and captures images it detects the first feature (tip of first cordon) and the second feature (trunk of the same fruit tree), and the fruit clusters between these features are assigned a unique grape ID, which corresponds to the first cordon such that the fruit clusters are assigned to the first cordon. As the agricultural machine 10 traverses the route and a tip of another cordon (a second cordon) is detected, fruit clusters are identified between the trunk and the tip of the second cordon and assigned a unique grape ID. Those unique grape IDs between the trunk and the second cordon tip are assigned to the second cordon. Therefore, the first feature changes from the tip of the first cordon, to the tip of the second cordon. Alternatively, the first feature may change to the trunk and the second feature may change to the tip of the second cordon. Figure 9 shows the yield per cordon for a single fruit tree whereby the second feature is the trunk of the fruit tree. The yield of the fruit tree may be determined based on the yield per cordon. For each newly detected cordon which belongs to another fruit tree, if the unique grape ID has also changed, the assignment will begin again.

As the GPS coordinates of each fruit tree, and its cordon, is determined as described in previous embodiments. When the yield of each cordon or fruit tree is known, the user of the above methods may be able to overlay the yield of the fruit tree positionally on a map. This may aid the user in understanding how well the field has performed as a whole, as well as identifying regions of the field that have produced a high or low yield. It is especially useful for identifying low yielding fruit trees, as this allows the user to focus on determining why those fruit trees have produced a low yield. For example, the user may identify a whole row that has produced a low yield and the user may pay close attention and realise that the low yield row is shielded from sunlight for 50% of the day.

In the second and third embodiments, the map with the overlayed yield per fruit trees may be more granular as the yield per cordon is known. This user then may pay close attention to particular cordons for improving the yield.

## Claims

1. A computer-implemented method of estimating a yield of a fruit tree, the computer-implemented method comprising:
capturing a plurality of images of a row of fruit trees;
detecting a first feature of a first fruit tree and a second feature of a second fruit tree in the row of fruit trees in the images;
detecting fruit clusters in the plurality of images;
assigning any fruit clusters between the first feature and the second feature to the first fruit tree;
calculating an area of the assigned fruit clusters; and
estimating the yield of the first fruit tree based on a total area of the assigned fruit clusters.

2. A computer-implemented method of estimating fruit yield of a fruit tree cordon, the computer-implemented method comprising:
capturing an image including the fruit tree;
detecting a first feature and a second feature of the fruit tree in the image;
detecting fruit clusters in the image;
identifying any fruit clusters between the first feature and the second feature of the fruit tree;
calculating an area of the identified fruit clusters; and
estimating the yield of a cordon of the fruit tree based on areas of the identified fruit clusters.

3. The computer-implemented method of Claim 2, wherein identifying any fruit clusters between the first feature and the second feature to the fruit tree comprises:
determining a position of each fruit cluster, the first feature, and the second feature;
comparing the position of each fruit cluster to the respective positions of the first and second features; and
identifying at least one fruit cluster of the fruit tree having a position between the respective positions of the first and second features.

4. The computer-implemented method of Claim 3, wherein determining the position of each fruit cluster comprises:
determining a centre point of each fruit cluster.

5. The computer-implemented method of any of Claims 2 to 4, wherein the fruit tree is a cordon in a multiple cordon fruit tree.

6. The computer-implemented method of Claim 5, wherein the first feature is a tip of the cordon, and the second feature is a tip of a further cordon of the multiple cordon fruit tree.

7. The computer-implemented method of Claim 5, wherein the first feature is a tip of a first cordon, and the second feature is a trunk of the multiple cordon tree.

8. The computer-implemented method of any preceding claim, wherein detecting one or more of the first feature, the second feature, and the fruit clusters comprises constructing a bounding box therearound using a machine learning model.

9. The computer-implemented method of Claim 8, wherein the machine learning model is a You Only Look Once, YOLO, algorithm.

10. The computer-implemented method of Claim 8 or Claim 9, wherein calculating an area of the assigned fruit clusters comprises counting a number of pixels within each bounding box.

11. The computer-implemented method of any of Claims 1 to 9, wherein calculating an area of the assigned fruit clusters comprises:
semantically distinguishing pixels associated with the fruit clusters from pixels not associated with the fruit clusters; and
counting the pixels associated with the fruit clusters.

12. The computer-implemented method of any preceding claim, wherein estimating yield of the fruit tree cordon or fruit tree comprises estimating a weight of fruit based on a predefined relationship between weight of fruit and area of fruit.

13. The computer-implemented method of Claim 1 or any claim dependent thereon, wherein the first feature is a trunk of the first fruit tree and the second feature is a trunk of the second fruit tree.

14. The computer-implemented method of any preceding claim, wherein the fruit cluster is a bunch of grapes.

15. A transitory, or non-transitory, computer-readable medium having instructions stored thereon, that when executed by at least one processor causes the at least one processor to perform the computer-implemented method of any preceding claim.

16. An agricultural machine comprising:
a camera; and
a controller configured to perform the method of any Claims 1 to 14.
